# EUROPEAN PATENT APPLICATION

(11) **EP 2 256 682 A1**
(43) Date of publication of application: **01.12.2010**
(21) Application number: 09290393.9
(22) Date of filing: 27.05.2009
(51) Int. Cl.: G06Q 30/00, H04N 7/173

(54) **Content tracking**

(71) Applicant: Alcatel Lucent, 75008 Paris (FR)
(72) Inventor: Sharpe, Randall B., Chapel Hill, North Carolina 27516 (US); Clougherty, Mark Michael, Chatham, New Jersey 07928 (US); Kisel, Andrey, Maidenhead, Berkshire SL6 8DH (GB)
(74) Representative: Kensett, John Hinton

(57) **Abstract**

An advertisement tracker is disclosed which is usable in a network, comprising means for receiving data related to advertising content transmitted on one or more channels; means for receiving data relating to channels transmitted to one or more users; and means for correlating the advertising content data with the received channel data to determine viewing of particular advertising content by a particular user.

## Description

### Field of Invention

This invention relates to content tracking of content delivered over a network to a subscriber or other user. In particular, but not exclusively, it relates to the tracking of advertisements or advertising material delivered to an end user over an IPTV or similar environment.

### Background

IPTV is becoming more and more common and whereas traditional business models of IPTV are largely based upon subscription services, it is also possible for IPTV services to be at least partially funded by advertising. It is very important to be able to track information about user consumption of advertisements on broadcast TV channels, whether over traditional broadcast routes or over internet TV or similar network TV systems, in order that advertisers can see how effective their advertisement is and also for pricing purposes. Advertisements generally fall into the category of either linear advertisements (LA) which are advertisements distributed as standard in a stream and for which the same advertisement is distributed to all users viewing that program or stream, and targeted advertisements intended for a specific user or group of users and which are inserted into the broadcast program (eg at a local, regional or national level).

Tracking of advertising viewing will be useful to create an extensive user profile, to quantatively score the relevance of adverts and also if feedback is used from a user profile from one service delivery platform (e.g. internet browsing or searching) and used to personalise advertisements delivered via another service delivery platform such as IPTV.

It is possible to track advertisements at the client itself, i.e. at a user's set top box or similar, and to generate information from the set top box (STB) regarding viewing of advertisements to be sent to service providers.

This approach, however, requires additional software and functionality at the STB or other client side equipment and is of limited functionality. This approach also requires extensive knowledge about presence of advertisements in the broadcast program, which is impractical to acquire at the client side.

The present invention arose in an attempt to provide an improved advertising tracking system.

### Summary

According to the present invention in a first aspect there is provided an advertisement tracker usable in a network, comprising means for receiving data related to advertising content transmitted on one or more channels; means for receiving data relating to channels transmitted to one or more users; and means for correlating the advertising content data with the received channel data to determine viewing of particular advertising content by a particular user.

Preferably, the advertisement tracker is provided at an access network.

By monitoring advertisement viewing away from the client side, no modification of client equipment is necessary and the monitored data may be used for many purposes.

Channel change information, for example information from a Fast Channel Change Server (FCC) or from users joining and leaving an IP multicast stream, which is often used to carry broadcast channels, may be used to determine details of channels viewed and timing.

An advertising server may be arranged to provide details of advertising content and/or timing to the tracker.

In a further aspect the invention provides a method of tracking advertising viewing by a user over a network, comprising, within the network, obtaining data representative of a channel a user views, and data representative of advertisement details broadcast on that channel, and correlating the two to determine data representative of viewing of specific advertising content by specific users.

### Brief Description of Drawing

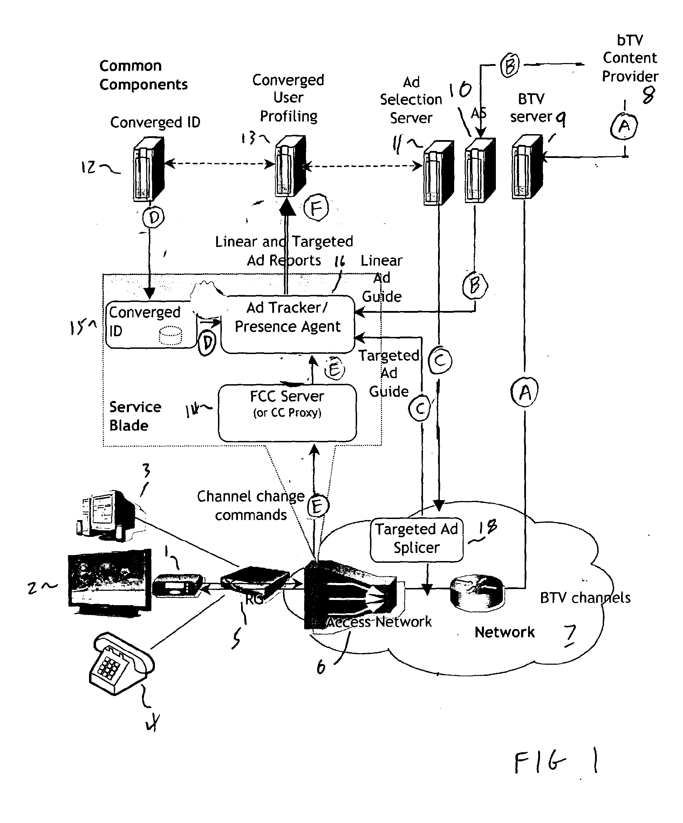

Embodiments of the invention will now be described, by way of example only, with reference to the accompanying schematic drawing Figure 1 which shows a network.

### Description

Referring to Figure 1, there is shown a network, for example an Internet Protocol (IP) network, via which, amongst other functionality, end users receive TV content. At an end user's premises there is provided a set top box 1 and TV display 2. The user will also generally have a computer 3 and a telephone 4. These are all connected via a Residentail Gateway (RG) 5, which is a generic term for a modem, router or similar at user's premises, router, cable modem or other means 5 to an access network 6 forming part of the general network 7 such as the Internet Protocol network.

A broadcast TV content provider 8 provides content to a broadcast TV server 9 (i.e. an IPTV server). Advertising content metadata such as ID, time, description, etc is also provided to an advertising server (AS) 10. This advertising metadata is used to crate a 'linear advertisement guide' - an accurate list of advertisements in the stream with corresponding identifications and timings. There is also provided an advertising selection server 11 for selection of targeted advertisements.

Embodiments may utilise a converged user profile in which user profiles are established which are usable over different platforms and services, ie a user may have a converged user profile which is usable both for Internet use and for IPTV use and thus Figure 1 also shows a converged identity storage 12 and a converged user profiling node 13. Within the access network 6 are provided a fast channel change (FCC) server 14, a cached converged identity database 15 and an advertisement tracker (AT) and/or presence agent 16. It should be noted that while the embodiment using fast channel change is illustrated, it will equally be applicable for normal channel change, eg based on IP multicast protocols such as Internet Group Management Protocol (IGMP) or Multicast Listener Discovery (MLD) and others.

These may be provided as software applications, by hardware or by a combination of these. The FCC server caches a window of a certain duration, typically a rolling window, of each TV channel to be delivered to the user or a selection of TV channels. It is used for enabling a user to quickly select certain channels, typically the more popular channels, so that when a user wishes to change channel a signal is sent from his set top box to the FCC server requesting that particular channel. That channel is then made available more quickly to the user than if an FCC process was not used. FCC servers are known in themselves. The set top box communicates with the FCC server using channel change commands. Where an FCC is not present, other channel change functionality is generally used.

The AT 16 is an element used for tracking advertisements used and viewing. This may be a software application or hardware and may be provided on a single server or other piece of equipment or several distributed pieces of equipment or software applications.

Other configurations than that shown in Figure 1 may, of course, be used.

The AT 16 receives user ID information or information relating to the TV channel or TV content the viewer has watched via set top box 1 and correlates this with data relating to advertisements which were sent to that user or inserted into that channel. By comparing the user's viewing history with the advertising data, which can include timing data, information is obtained relating to which particular advertisements the user actually viewed. Other information may be desired, such as the length of time that the user spent watching that channel. That is, if it is determined that the user started watching an advertisement but then switched from that channel ten seconds into the advertisement, then this data can be obtained. The data can then be used for many different purposes.

Channel change data (such as FCC data) is one example of a means by which the AT is provided with information regarding the channel viewed, timing and duration of viewing.

More detailed examples are given below referring to Figure 1 and the alphanumerically labelled flow indicated thereon.

In Step A, broadcast TV (6TV) channels from a TV content provider 8 are ingested into the network through the broadcast TV server 9 and delivered to the user/client via the access network 6 to his set top box 1 for example.

In Step B, the broadcast TV content provider is requested to provide associated metadata in the form of a linear advertising guide. This is provided via the advertising server 10 and is provided to the AT 16. In effect, a linear advertisement guide corresponding to an electronic program guide is provided. This may include data such as the title of the advertisement, its time and duration, the channel it is broadcast on, and so on. In one specific example, the following information is provided:
i) Channel record - typically one record for each bTV channel to be tracked
ii) Channel ID - an identifier of the broadcast TV (bTV) channel
iii) Ad record - one record for each advertisement to be tracked on the channel

a) Ad ID - identifier of the advertisement (used for reporting tracking results)
b) Ad start - time of start of advertisement in the stream
c) Ad end - time of end of advertisement in the stream.

As stated, this linear advertisement guide is delivered via the application server 10 to the advertiser tracker 16 which is in the access node.

In Step C, a targeted advertisement splicer 18 may also be provided (in some embodiments). It is used to provide specific and targeted advertisements and, under control of the advertising selection server 11, substitutes parts of the linear broadcast TV screen with targeted advertisements. This may be done for example during commercial breaks. The targeted advertising server 18 is modified to generate a targeted advertisement guide which contains information about advertisements presented to individual users. For example:
i) Channel record - one record for each broadcast TV channel to be tracked
ii) Channel ID - an identifier of the bTV channel
iii) Ad window record - one record for each advertising window on the channel

a) Ad window ID - an identifier of the ad window
b) Subscriber record - one record for each subscriber targeted in the window which may include a subscriber ID and an ad record which is one record for each advertisement presented in the ad window. The ad record may comprise an ad ID (an identifier of the advertisement presented to the subscriber in the window and used for reporting tracking results, and advertisement start and stop times).

The targeted advertising guide ID is delivered via the targeted ad splicer 18 to the advertising tracker 16 in the access network.

In Step D, a converged identity cache 15 loads and resolves the network address (eg High Speed Internet line ID, IP address) to IPTV subscriber identity ID (or the ID of an active IPTV profile) and perhaps to an associated address (typically a URL - Universal Resource Locator) of the converged profile. Note that since the profile might be converged across multiple domains, such as internet, IPTV or IMS (IP Multimedia System), then the IPTV subscriber ID may not be the same as the ID of converged profile. This data therefore identifies the user.

In Step E, the FCC server in the access network tracks user channel change requests and reports channel change requests to the AT 16. Note that if an FCC service is not available, then other means for tracking channel change may alternatively be used. One of these for example is IGMP (Internet Group Management Protocol) proxy, although other methods and protocols can be used, eg MLD.

In Step F, the advertising tracker determines the viewed linear or targeted advertisement (or just linear or targeted if only one of these is used) by correlating user presence on the channel at any particular time with linear and targeted advertising guides. The advertising tracker 16 then generates linear and targeted ad viewing reports and might also be used to update the converged user profiling server 13.

A typical linear advertisement viewing report may be as follows:
Subscriber record - one record for each subscriber track, comprising:
   i) Subscriber ID - identity of subscriber
   ii) Tracking record - one record for each advertisement viewed by the subscriber
      a) Index - record index to allow reporting multiple views of the same advertisement
      b) Ad ID - identifier of the advertisement
      c) View status - indication of subscriber action during an advertisement
      d) Percentage of advertisement presented to subscriber
      e) Timestamp

Note that the view status record might be an indication of actions taken by the subscriber (end-user) such as: viewing the whole advertisement, or only a part of the advertisement and perhaps say which part (i.e. start portion, end portion, or some intermediate portion) the subscriber viewed or indicating other action the user performed while the advertisement is being broadcast. It might indicate which channel the subscriber viewed immediately before and/or after the channel which broadcast that linear advertisement.

A timestamp might be reported directly by the advertising tracker or might be automatically added during a log-in process by the converged user profiling server 13.

Targeted advertisements may be reported in the same manner.

The AT 16 can then send advertising reports to the converged user profiling server 13, either on demand or at various different times and with different options. For example, it may periodically report advertising viewing events, it may report at the end of a targeted advertising window as notified by the targeted ad splicer 18. For example, such a trigger can determine all users who watch this particular channel during a targeted advertising window and generate a suitable report. Alternatively, the ad tracker 16 may send a report at the end of a linear advertising window. For example, the advertising tracker 16 when loading a linear or targeted advertising guide might schedule a number of events to be instigated or fired at the end of each linear or targeted ad respectively. Such an event can determine all users who presented on the channel during the linear advertising window and generated a report.

Many other uses may be made of the data and report strategies used.

Tracking is therefore done at a point in the network higher than that of the user's equipment or set top box itself. Thus, the set top box will require no modification to use the service.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects and embodiments of the invention, as well as specific examples thereof, are intended to encompass equivalents thereof.

Note that a 'user' might refer to a single user, or a group of users sharing a common identity (eg a family) or a common set top box or other client apparatus.

## Claims

1. An advertisement tracker usable in a network, comprising means for receiving data related to advertising content transmitted on one or more channels; means for receiving data relating to channels transmitted to one or more users; and means for correlating the advertising content data with the received channel data to determine viewing of particular advertising content by a particular user.

2. A device as claimed in any preceding claim, adapted to form part of an access network.

3. A device as claimed in any preceding claim, including means for using channel change commands to determine viewing of particular channels, and means for correlating the channel change commands with a user identity to determine the channel a user is viewing at any time.

4. An access network including an advertisement tracker as claimed in any preceding claim.

5. A network including a tracker as claimed in any preceding claims, means for providing advertisement data to the tracker and means for providing user identity data to the tracking device.

6. A network as claimed in Claim 5, wherein the means for providing advertising data comprises an advertising server.

7. A network as claimed in Claim 5 or 6, including a user profiling means and means for providing user profiling data to the tracker for correlation with advertisement data and channel tracking data.

8. A method of tracking advertising viewing by a user over a network, comprising, within the network, obtaining data representative of a channel a user views, and data representative of advertisement details broadcast on that channel, and correlating the two to determine data representative of viewing of specific advertising content by specific users.

9. A method as claimed in Claim 8, wherein the tracking is done at an access network.

10. A method as claimed in Claim 9, wherein an advertisement tracker node is used for the correlating.

11. A method as claimed in claim 10, wherein channel change information is used to establish channel data.

12. A method as claimed in any of Claims 8 to 10, comprising receiving advertisement information representative of advertisement details and timing and correlating this with user information and channel change information.

13. A method as claimed in Claim 12, wherein channel change information is provided via one of a fast channel change means, IGMP or MLD

14. A method as claimed in any Claims 8 to 13, wherein a linear advertisement guide and/or targeted advertisement guide is used for tracking of, respectively, linear and targeted advertising viewed by a user.
